# EUROPÄISCHE PATENTSCHRIFT

(11) **EP 0 169 509 B1**
(45) Veröffentlichungstag und Bekanntmachung des Hinweises auf die Patenterteilung: **09.02.1994**
(21) Anmeldenummer: 85109044.9
(22) Anmeldetag: 19.07.1985
(51) Int. Cl.: E06B 3/66, B44F 1/06, B44C 5/04

(54) **Platten- oder quaderförmiges lichtdurchlässiges Bauelement**
Plate-like or rectangular parallelepipedum translucent construction element
Elément de construction translucide en forme de plaques ou de parallélépipède rectangle

(30) Priorität: 23.07.1984 DE 3427106
(43) Veröffentlichungstag der Anmeldung: 29.01.1986
(73) Patentinhaber: Hettling-Denker, Renate, D-84568 Pleiskirchen (DE)
(72) Erfinder: Hettling-Denker, Renate, D-84568 Pleiskirchen (DE)

(56) Entgegenhaltungen:
- DE-A- 1 704 062
- DE-A- 2 702 384
- DE-A- 3 029 613
- DE-A- 3 232 238
- FR-A- 1 193 766
- FR-A- 1 513 466
- FR-A- 2 054 564
- FR-A- 2 080 154
- FR-A- 2 365 446

## Beschreibung

Die Erfindung betrifft ein Platten- oder quaderförmiges lichtdurchlässiges Bauelement.

In der modernen Architektur werden lichtdurchlässige Bauelemente in steigendem Maße verwendet beim Bau von Kirchen, Schulen, Universitäts- Verwaltungs- und Marktzentren, Schwimmbädern, Straßenpassagen, Hotels und Banken, bei denen die eigentlichen Glaskörper Verbundscheiben sind. Die Techniken der Skelettbauweise und der Verbundglasherstellung wurden gleichermaßen vorangetrieben und erschlossen sich immer neue Anwendungsgebiete, so daß wir heute von einer Glasarchitektur sprechen.
Glas ist nicht nur Medium für Licht und Wärme, sondern auch und gerade für Farbigkeit in Verbindung mit Licht.

Das ist seit uralten Zeiten so: Die traditionelle Glasmalerei kennen wir von Kirchen und Schlössern. Marc Chagall führte sie zu höchster Vollendung.
Es geht bei dieser traditionellen Glasmalerei um ein Verfahren, bei dem farbige Glasstücke mit farblosem Glas unter hohen Temperaturen miteinander verschmolzen und anschließend in eine Bleikonstruktion eingefaßt und bemalt werden. Bei diesen aufwendigen handgefertigten Bleiverglasungen handelt es sich stets um teure Unikate.

Gemessen an der farbigen künstlerischen Ausgestaltung von Glasflächen früherer Zeiten, sind die Möglichkeiten farbiger Gestaltungen in der modernen Glasarchitektur außerordentlich gering. Das liegt einerseits an den technischen Anforderungen, die an moderne Glaskonstruktionen gestellt werden und andererseits daran, daß die traditionelle Glasmalerei praktisch bis heute in der Tradition des Mittelalters steht, also in technischer Hinsicht diesen gestellten Bedingungen nicht gerecht werden kann.

Im Gegensatz zur traditionellen Bleiverglasung, die durch sauren Regen angegriffen und zersetzt wird und deshalb sehr teuren Reinigungs-, Pflege- und Erhaltungsmaßnahmen unterworfen ist, ging es um farbige Glasgestaltungen, die unangreifbar und leicht zu reinigen sind.

Es versteht sich von selbst, daß die farbigen Gestaltungen absolut lichtecht sein müssen. Außerdem muß eine originalgetreue Wiedergabe der verwendeten Entwürfe und Vorlagen gewährleistet sein.

Der Erfindung liegt die Aufgabenstellung zugrunde, ein lichtdurchlässiges Bauelement der eingangs genannten Art zu schaffen, das billig herzustellen ist, insbesondere die Möglichkeit zur Serienherstellung eröffnet, in ästhetischer Hinsicht ansprechend ist und die oben genannten Nachteile weitgehend vermeidet.

Die Aufgabe wird durch die Merkmale des Patentanspruches 1 gelöst.

Es ist zwar eine Offenlegungsschrift DE - A - 3 232 238 bekannt geworden, nach der aus zwei Einzelglasscheiben und einer diese verbindenden Zwischenschicht ein Verbund hergestellt wird, in dessen Innenraum anstelle von Drähten Dekorstreifen aus einer dunklen undurchsichtigen Paste aufgebracht sind.

Jedoch erschließt die Maßnahme nach der Erfindung eine völlig neue Technik für die Herstellung von lichtdurchlässigen und künstlerisch ausgestalteten Bauelementen. Die Herstellung ist billig, da teure Bleiverglasungen entfallen. Darüber hinaus ist die Möglichkeit zur maschinellen Serienfertigung eröffnet. Die nach Art einer Glasmalerei direkt auf eine der Bestandteile aufgetragene Farbe wirkt leuchtend, sowohl bei Durchleuchtung als auch bei Beleuchtung von vorne, d. h. bei Beleuchtung von der Seite des Betrachters aus gesehen.

Die Farbaufträge befinden sich immer im Innenraum des Verbundes, also auf einer oder mehreren Innenseiten der Platten und sind dadurch vor allen schädigenden Außeneinflüssen geschützt. Bei Farbgestaltungen auf mehreren Innenseiten entstehen z. B. hoch interesseante perspektivische Lösungen.

Die Platten werden nach dem Bedrucken durch Gießharz zusammengeklebt, welches durchsichtig und flüssig wie Wasser ist, also unsichtbar. Durch ein am Rande der Platte umlaufendes Klebeband werden die Platten aufeinander geklebt und haben dadurch ca. 1 mm Abstand voneinander. Danach wird das flüssige Gießharz in den Innenraum eingefüllt und konserviert nach der chemischen Aushärtung den Farbauftrag.

Zwar war die Verwendung von Gießharz als Kleber sehr schwierig und problematisch, weil es sich dabei um ein aggressives Mittel handelt, das unerwünschte chemische und physikalische Reaktionen z. B. beim Farbauftrag hervorrufen kann. Jedoch wurde dieser schwierige Weg beschritten, weil Gießharz schalldämmende und aktiv wirkende Schutzeigenschaften hat, die bei 'Glas im Bau' zur Wirkung kommen.

Nach vielen Mißerfolgen und umfassenden Testreihen, gelang es zum ersten Mal in der Geschichte der Verbundglasherstellung und darüber hinaus in der Geschichte farbigen künstlerisch gestalteten Glases, jede nur denkbare farbige Darstellung mit den beschriebenen Merkmalen im Verbund herzustellen und damit ein weites Gebiet individueller Glasgestaltung zu eröffnen mit völlig neuen Entwurfs- und Gestaltungstechniken. Damit schloß sich die Lücke, die zwischen der mittelalterlichen Glaskunst und moderner Glasbautechnik entstanden war.

In dieser hier gewählten Kombination treffen sich Kunst und modernste Technik auf eine neue Weise und verbinden sich zu einer harmonischen und technisch ausgereiften Symbiose.

Weitere Versuche haben ergeben, daß statt des Gießharzes auch PVB-Folien verwendet werden können, die allerdings keine schalldämmende Wirkung haben.

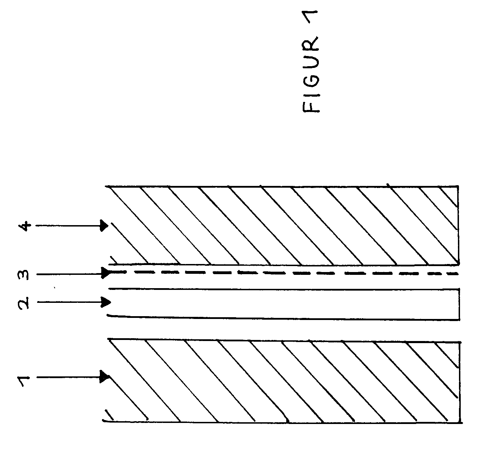

Die Erfindung wird im folgenden anhand des in der Figur 1 schematisch dargestellten Ausführungsbeispiels näher erläutert. Es zeigt:
- Figur 1:: Ein Bauelement mit Gießharzschicht im Teilquerschritt, wobei die einzelnen Bestandteile zur Verdeutlichung auseinandergerückt nach Art einer Explosionsdarstellung gezeichnet sind.

Figur 1 zeigt ein Ausführungsbeispiel bei dem die lichtdurchlässigen Platten 1, 4 des Bauelementes über einen Kleber 2 miteinander verbunden sind. Die Platten 1, 4 bestehen aus Glas und der die Platten verbindende Kleber aus Gießharz. Auf einer der Platten 4, ist ein Kunstwerk nach Art einer Glasmalerei aufgebracht. Der Kleber ist mit den Glasplatten fest verbunden, so daß ein kompaktes Verbundelement entsteht.

Weitere Ausführungsvarianten sind möglich. So kann als Zwischenträger PVB-Folie verwendet werden. Auch kann das Kunstwerk verteilt auf mehreren Glasplatten - und zwar immer in Innenraum - angebracht werden.

## Patentansprüche

1. Platten- oder quaderförmiges lichtdurchlässiges Bauelement mit mindestens zwei Platten (1, 4) aus transparentem Material, die ohne wesentlichen Lichtverlust über einen Zwischenträger (2) dicht miteinander verbunden sind und auf mindestens einer der Innenflächen der Platten ein zumindest teilflächiges beliebig gestaltetes mehrfarbiges Kunstwerk nach Art einer Glasmalerei durch Siebdruck (3) direkt aufgebracht ist, das nach Verschließen des Verbundes gegen Witterungs- und mechanische Einflüsse geschützt ist.

2. Bauelement nach Anspruch 1, dadurch gekennzeichnet, daß der Zwischenträger (2) eine lichtdurchlässige Folie ist.

3. Bauelement nach Anspruch 1, dadurch gekennzeichnet, daß der Zwischenträger (2) eine lichtdurchlässige Klebstoffschicht ist.

## Claims

1. Plate or block shaped translucent building element including at least two plates (1,4) of transparent material which are tightly connected together via an intermediate carrier (2) without substantial light loss and on at least part of the surface of at least one of the inner surfaces of the plates a multi-coloured work of art of any deisred form in the manner of a glass painting is directly applied by screen printing which, after sealing the composite structure, is protected from wheathering and mechanical influences.

2. Bulding element as claimed in claim 1, characterised in that the intermediate carrier (2) is a translucent film.

3. Building element as claimed in claim 1, characterised in that the intermediate carrier (2) is a translucent layer of adhesive.

## Revendications

1. Elément de construction perméable à la lumière en forme de plaque ou carreau avec au moins deux plaques (1,4) en matériau transparent, qui sont liées entre elles par un support intermédiaire (2) de manière étanche et sans perte notable de lumière et avec sur partie au moins de l'une au moins des faces internes des plaques la déposition directe par sérigraphie (3) d'une oeuvre d'art polychrome du genre peinture sur verre de forme quelconque, laquelle se trouve protégée contre les influences climatiques et mécaniques après fermeture du complexe.

2. Elément de construction selon la revendication 1, caractérisé en ce que le support intermédiaire (2) est une feuille transparente.

3. Elément de construction selon la revendication 1, caractérisé en ce que le support intermédiaire (2) est une couche d'adhésif transparent.
